# EUROPEAN PATENT APPLICATION

(11) **EP 4 648 277 A1**
(43) Date of publication of application: **12.11.2025**
(21) Application number: 23914184.9
(22) Date of filing: 27.04.2023
(51) Int. Cl.: H02S 40/10, B08B 3/02, B08B 1/32, B08B 13/00

(54) **CLEANING ROBOT**

(30) Priority: 03.01.2023 CN 202310000580
(71) Applicant: Suzhou Radiant Photovoltaic Technology Co., Ltd, Suzhou, Jiangsu 215164 (CN)
(72) Inventor: XU, Fei, Suzhou, Jiangsu 215164 (CN); DENG, Long, Suzhou, Jiangsu 215164 (CN)
(74) Representative: Murgitroyd & Company
(86) International application number: PCT/CN2023/091027
(87) International publication number: WO 2024/146033

(57) **Abstract**

The present application provides a cleaning robot, including a body, a controller, a housing, and a water tank. The water tank is located above the housing and the controller is located below the housing, so that the controller and the water tank are isolated from each other and have good water-proof performance.

## Description

This application claims priority to China Patent Application No. 202310000580.3 filed with the China Patent Office on 3 January 2023, titled "CLEANING ROBOT", all contents of which are incorporated by reference into this application.

### FIELD OF INVENTION

The present application relates to a technical field of photovoltaic panel cleaning, and particularly to a cleaning robot.

### BACKGROUND OF INVENTION

Photovoltaic panels use the voltaic effect of semiconductor materials when exposed to sunlight to convert solar energy directly into electricity. Photovoltaic panels are installed outdoors, so dust or other attachments are easily accumulated on surfaces of panels, giving rise to reduced power generation efficiency of the photovoltaic panels. Generally, surfaces of photovoltaic panels need to be cleaned regularly. In order to reduce the cost of manual cleaning and improve cleaning efficiency, photovoltaic power stations often use cleaning robots to clean the panel surfaces.

To ensure power generation efficiency, photovoltaic panels are generally tilted at an angle relative to the horizontal plane. Conventional cleaning robots are applied to horizontal surfaces, so there are many difficulties in applying them to tilted photovoltaic surfaces.

Cleaning robots include controllers, battery packs, cleaning devices, and water supply devices. When a body of the cleaning robot moves on the surface of the photovoltaic panel, the water supply device can spray water onto the surface of the photovoltaic panel, and the cleaning device can clean the dust and attachments on the surface of the panel.

Due to the need for heat dissipation, a housing of the controller cannot be designed to be completely closed, which makes it easy for water to enter the inside of the controller; the battery pack needs to supply power to each component through wires, and water is also easy to enter each interface. The robot works outdoors, and it is very likely to encounter rain suddenly during operation. The water supply device includes a water tank installed in the vehicle body. When adding water or replacing the water tank, a small amount of water may also exist on outer walls of the water tank that will cause the risk of damage to robots.

If top and side walls of the vehicle body are designed as a complete housing, although the waterproof problem can be solved, the water tank and the battery pack of the robot are covered by the housing. Each time the water tank is removed, or the battery pack is replaced, the entire housing needs to be removed, making the operation process complicated and the user experience poor.

### SUMMARY OF INVENTION

The first object of the present invention is to provide a cleaning robot to solve the technical problem that improving the waterproof performance of the robot and facilitating the replacement of a water tank and/or a battery pack cannot be fulfilled at the same time.

In order to solve this technical problem, the present application provides a cleaning robot including a vehicle body, a controller, a housing, and a water tank. the vehicle body includes a chamber surrounded by a chassis and a side wall of the vehicle body, and the chamber is divided into a first space, a second space, and a third space in sequence by two partition brackets. The controller is disposed in the first space and fixed to the vehicle body, the housing is fixed to a top of the vehicle body and covers the chamber of the vehicle body, and a middle part of the housing is concave to form a sinking area. The sinking area extends into the second space and surrounds a water tank groove, and the water tank is detachably installed in the water tank groove.

The second object of the present invention is to provide a cleaning robot to solve the technical problems in the prior art such as insufficient track friction causing serious deviation and sliding of the vehicle body.

In order to solve this technical problem, the present application provides the following technical solutions: the cleaning robot further includes a movable suction device. The movable suction device includes a fan, a ventilation duct, and a movable suction cup. The fan is disposed in the second space, fixed to the top surface of the chassis, and electrically connected to the controller. The ventilation duct is disposed in the second space and fixed to the top surface of the chassis. The movable suction cup is arranged on a bottom surface of the chassis, and a suction space is enclosed between the movable suction cup and the chassis. Specifically, the chassis defines a second through hole, and the second through hole is located in a projection of the movable suction cup on the chassis, one end of the ventilation duct is connected to the fan, and the other end is connected to the suction space through the second through hole.

The third object of the present invention is to provide a cleaning robot to solve the technical problem in the prior art that the spatial arrangement of multiple components is unreasonable, resulting in insufficient utilization of the installation space.

In order to solve this technical problem, the present application provides the following technical solutions: at least one recessed portion is arranged on a bottom surface of the sinking area, and a fourth space is enclosed between each recessed portion and a top surface of the chassis. Specifically, the cleaning robot includes a central suction device and two fans, the central suction device is connected to the center of the chassis and is partially fixed to the top surface of the chassis, the fans are arranged in the second space, symmetrically distributed about a central axis of the central suction device, and fixed to the top surface of the chassis, and the central suction device and the fans are located in the recessed portion.

The fourth object of the present invention is to provide a cleaning robot to solve the technical problems in the prior art of unreasonable component arrangement and uneven weight distribution, which lead to deviation, slipping, and unstable operation of the cleaning robot during movement.

In order to solve this technical problem, the present application provides the following technical solution: the cleaning robot further includes a motor disposed in the first space and fixed to the top surface of the chassis. The motor is located between the controller and the chassis and is electrically connected to the controller.

The fifth object of the present invention is to provide a cleaning robot to solve the technical problem in the prior art that when the cleaning robot fails, stops traveling, or deviates from routes, a staff is unable to timely know and correct it.

In order to solve this technical problem, the present application provides the following technical solution: the controller includes a control box and a circuit board. The control box is fixed to the side wall of the vehicle body and/or the partition brackets, the circuit board is arranged in the control box, and the circuit board includes a control circuit composed of a plurality of electronic devices.

The present application provides a cleaning robot, which has an irregularly shaped housing on a top of a vehicle body, and covers a controller and a battery pack that are easily infiltrated with water inside the housing. A water tank is detachably arranged on the outside of the housing, so that the controller, the battery pack, and the water tank are physically isolated, thereby improving the waterproof performance of the controller and the battery pack. Furthermore, an opening is formed on the housing in an area corresponding to the battery pack, and an openable and closable cover plate is installed at the opening, so that the disassembly and installation of the battery pack is more convenient and quicker.

### BRIEF DESCRIPTION OF DRAWINGS

In order to illustrate the technical solutions more clearly in the embodiments of the present application, the drawings required for use in the description of the embodiments will be briefly introduced below. Obviously, the drawings described below are only some embodiments of the present application. For those skilled in the art, other drawings can be obtained based on these drawings without creative work.
FIG. 1 is a schematic structural view of a cleaning robot provided in the present application;
FIG. 2 is a schematic partially structural view of the cleaning robot provided in the present application;
FIG. 3 is a schematic structural view of a cleaning device of the cleaning robot provided in the present application;
FIG. 4 is an enlarged schematic view of an A portion in FIG. 3;
FIG. 5 is a schematic bottom plan view of the cleaning device of the cleaning robot provided in the present application;
FIG. 6 is a schematic view showing the installation of a motor and a vehicle body of a cleaning robot provided in the present application;
FIG. 7 is a schematic structural view of the cleaning robot provided in the present application;
FIG. 8 is a schematic view showing the connection between a housing, a vehicle body, and a cover plate of the cleaning robot provided in the present application;
FIG. 9 is a schematic exploded view of the housing, the vehicle body, and the cover plate of the cleaning robot provided in the present application;
FIG. 10 is a schematic view of the assembly of the housing and the vehicle body of the cleaning robot provided in the present application;
FIG. 11 is a bottom plan view of the housing of the cleaning robot provided in the present application;
FIG. 12 is a cross-sectional view of the housing and the vehicle body of the cleaning robot provided in the present application;
FIG. 13 is a schematic view showing the connection between the cover plate and the housing of the cleaning robot provided in the present application;
FIG. 14 is a schematic enlarged view of a B portion in FIG. 13;
FIG. 15 is a schematic structural view of the cover plate of the cleaning robot provided in the present application;
FIG. 16 is a schematic structural view of a movable suction device and a central suction device of the cleaning robot provided in the present application;
FIG. 17 is a bottom plan view of the movable suction device and the central suction device of the cleaning robot provided in the present application;
FIG. 18 is a cross-sectional view of the movable suction device and the central suction device of the cleaning robot provided in the present application;
FIG. 19 is a schematic exploded view of the central suction device of the cleaning robot provided in the present application.

### Description of reference numerals:

100, vehicle body; 110, chassis; 111, second through hole; 120, side wall; 131, first space; 132, second space; 133, third space; 140, metal sensor; 150, first distance sensor; 160, traveling device; 161, driving wheel; 162, driven wheel; 163, crawler track; 164, motor; 200, partition bracket; 300, housing; 310, first part; 320, second part; 321, water tank groove; 322, first through hole; 330, third part; 331, battery slot; 332, opening; 333, hook; 340, recessed portion; 360, limiting post; 370, torsion spring; 380, image acquisition device; 400, cover plate; 410, limit slide rail; 411, limiting groove; 510, cleaning casing; 511, installation space; 520, roller brush; 530, roller brush motor; 540, nozzle; 550, water pump; 551, pipeline; 560, ultrasonic sensor; 610, fan; 620, ventilation duct; 630, movable suction cup; 640, support base; 641, servomotor; 642, first rod body; 643, second rod body; 650, second linkage member; 660, third linkage member; 670, first linkage member; 680, vacuum generator; 690, steering suction cup; 700, water tank; 710, sealing joint; 800, controller; 900, battery pack.

### DESCRIPTION OF PREFERRED EMBODIMENTS

The technical solutions in the embodiments of the present application will be clearly and completely described below in conjunction with the drawings in the embodiments of the present application. Obviously, the described embodiments are only part of the embodiments of the present application, rather than all the embodiments. Based on the embodiments in this application, all other embodiments obtained by those skilled in the art without making any creative work shall fall within the scope of protection of this application. In addition, it should be understood that the specific embodiments described herein are only used to illustrate and explain the present application, and are not used to limit the present application. In the present application, unless otherwise specified, directional words such as "up", "down", "left", and "right" generally refer to the up, down, left, and right of the device in actual use or working state, specifically the drawing direction in the accompanying drawings.

The present application provides a cleaning robot, which is described in detail below. It should be noted that the description order of the following embodiments is not intended to limit the preferred order of the embodiments of the present application. In the following embodiments, the description of each embodiment has its own emphasis. For parts that are not described in detail in a certain embodiment, reference can be made to the relevant descriptions of other embodiments.

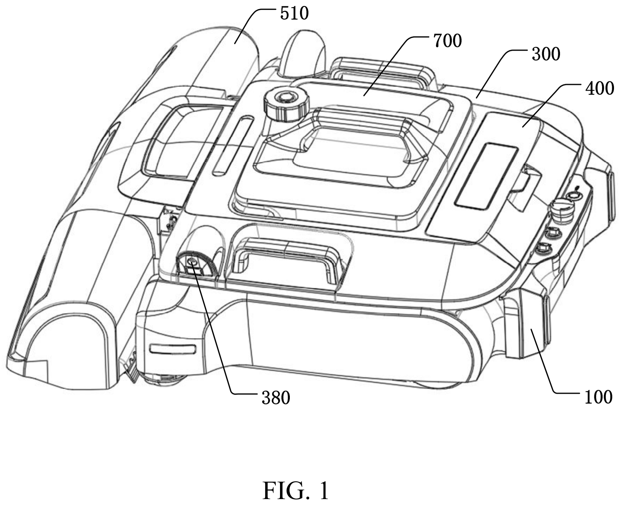

Referring to FIG. 1, the present application provides a cleaning robot that can move on a smooth cleaning surface to clean the cleaning surface. The cleaning surface may be a photovoltaic panel or a panel array composed of photovoltaic panels.

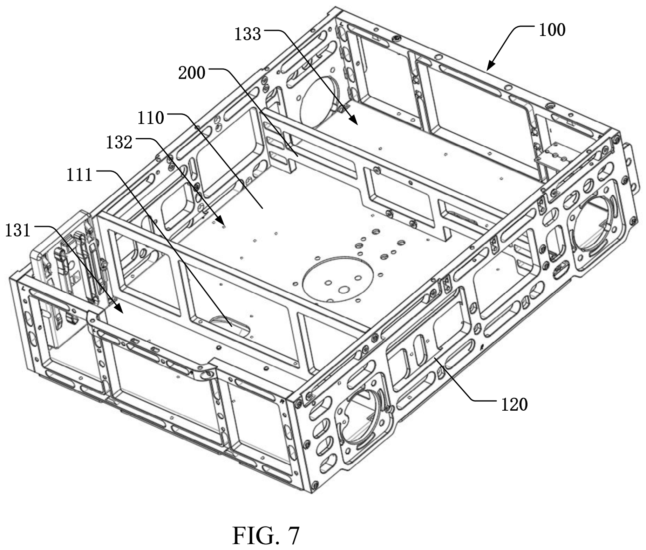

Referring to FIGs. 1 and 7, the cleaning robot includes a vehicle body 100 and a housing 300 arranged above the vehicle body 100. The vehicle body 100 includes a chassis 110 and side walls 120 installed on the chassis 110. The number of the side walls 120 can be one or more, and the number of the side walls 120 can be determined based on the specific shape and structure of the vehicle body 100. In this embodiment, the vehicle body 100 is rectangular parallelepiped in shape, and there are four side walls 120. Lower ends of the side walls 120 are fixed to an upper surface of the chassis 110, and the side walls 120 are connected in sequence to enclose a chamber. The side walls 120 are a frame structure composed of a plurality of rods in horizontal and vertical directions, so as to facilitate wiring and component assembly, which in term reducing the weight of the cleaning robot to achieve a lightweight design.

Referring to FIGs. 1 and 7, two partition brackets 200 are disposed inside the chamber of the vehicle body 100. The partition brackets 200 divide the chamber into a first space 131, a second space 132, and a third space 133 in sequence. A forward direction of the cleaning robot is defined as the front. In this embodiment, the first space 131 is located at the front of the vehicle body 100, the second space 132 is located at the middle of the vehicle body 100, and the third space 133 is located at the rear of the vehicle body 100.

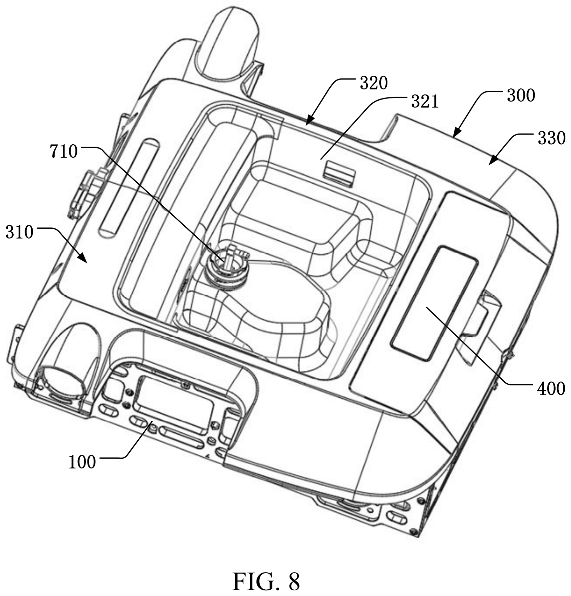

Referring to FIGs. 7 and 8, the housing 300 is fixed to the top of the vehicle body 100 by means of fastening screws, clamping, etc., and can cover the chamber of the vehicle body 100. The housing 300 includes an integrally formed first part 310, a second part 320, and a third part 330. Specifically, the first part 310 of the housing 300 covers the top of the first space 131; the second part 320 of the housing 300 is concave to form a sinking area, which can extend into the second space 132 and enclose a water tank groove 321. The third part 330 of the housing 300 can extend to the inside of the third space 133 and form a battery slot 331 together with a top surface of the chassis 110. An opening 332 is formed through the third part 330, and the opening 332 communicates with the battery slot 331.

The chamber is divided into a first space 131, a second space 132, and a third space 133 by the two partition brackets 200. The first space 131 with a closed top is formed between the vehicle body 100 and the first part 310 of the shell 300. The third space 133 with an opening 332 is formed between the vehicle body 100 and the third part 330 of the housing 300. In addition, the second part 320 of the housing 300 forms an open sinking area. The sinking area of the housing 300 extends into the second space 132, that is, the middle part of the housing 300 is recessed along the two partition brackets 200 to form a water tank groove 321, so the water tank groove 321 is isolated from the first space 131 and the third space 133 and is not connected to each other.

Referring to FIG.s 1 to 3, the cleaning robot further includes a cleaning device, a water supply device, and two sets of traveling devices 160. The traveling devices 160 are used to drive the vehicle body 100 to move on the surface of the photovoltaic panel. The cleaning device can clean the surface of the photovoltaic panel while the vehicle body 100 is moving. At the same time, the water supply device can spray cleaning water onto the surface of the photovoltaic panel to cooperate with the cleaning device to improve the efficiency of the cleaning robot.

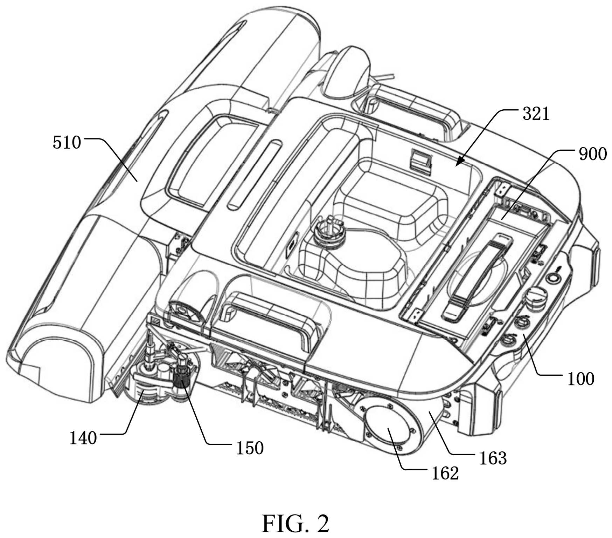

Referring to FIGs. 2, 3, and 6, the two sets of traveling devices 160 are symmetrically installed on both sides of the vehicle body 100, and each traveling device 160 includes a motor 164, a driving wheel 161, a driven wheel 162, and a crawler track 163. The motor 164 is installed in the first space 131 and fixed to the top surface of the chassis 110. The controller 800 is disposed above the motor 164 and can be electrically connected to the controller 800. The driving wheel 161 is fixed to an output shaft of the motor 164 through a connection key, and is connected to the side wall 120 of the vehicle body 100 through a rotation bearing, so that the driving wheel 161 can rotate relative to the vehicle body 100. The driven wheel 162 is connected to the side wall 120 of the vehicle body 100 through a rotation bearing, so that the driven wheel 162 can rotate relative to the vehicle body 100. In addition, the crawler track 163 annularly covers the outer side wall of the driving wheel 161 and the driven wheel 162 on the same side of the vehicle body 100.

When the cleaning robot is placed on the surface of the photovoltaic panel, the controller 800 sends a working signal to the motor 164. The motor 164 drives the driving wheel 161 to rotate through the output shaft. The driving wheel 161 drives the driven wheel 162 to rotate synchronously through the crawler track 163, thereby using the traveling device 160 to drive the cleaning robot to move along a preset route.

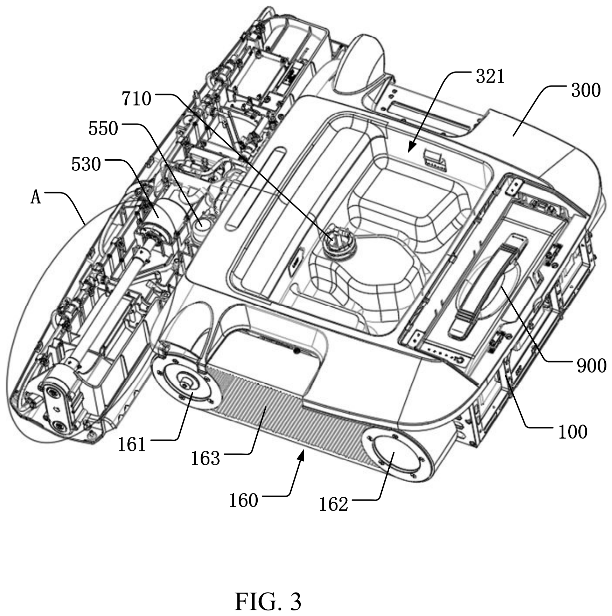

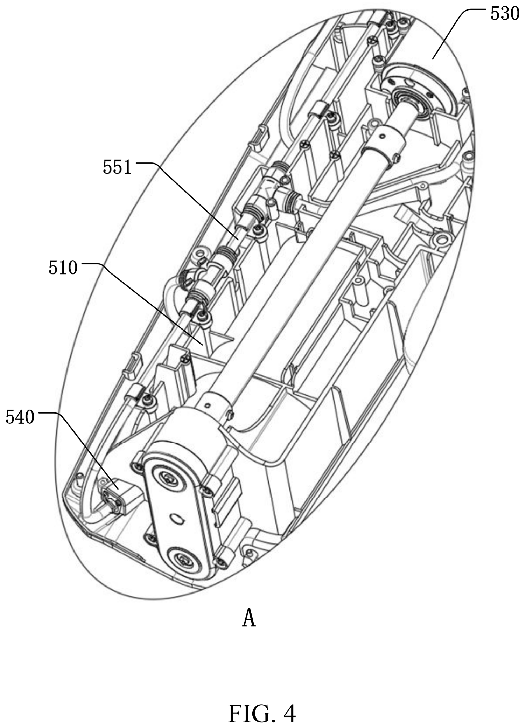

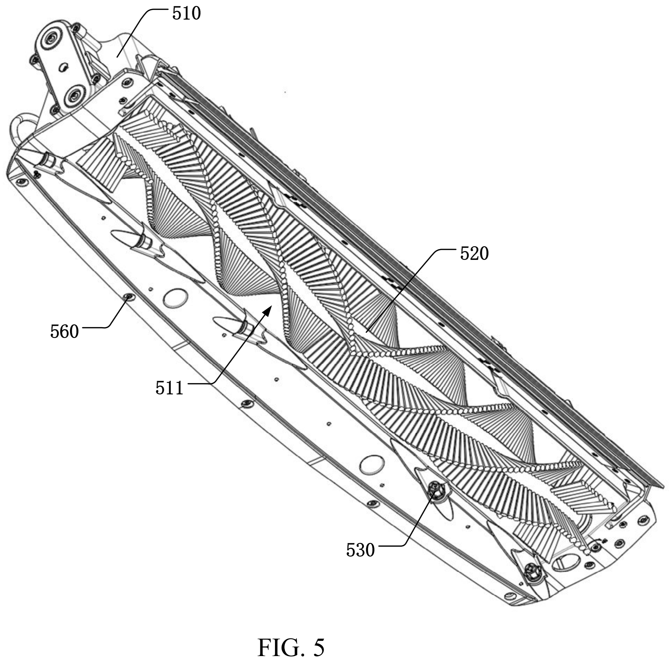

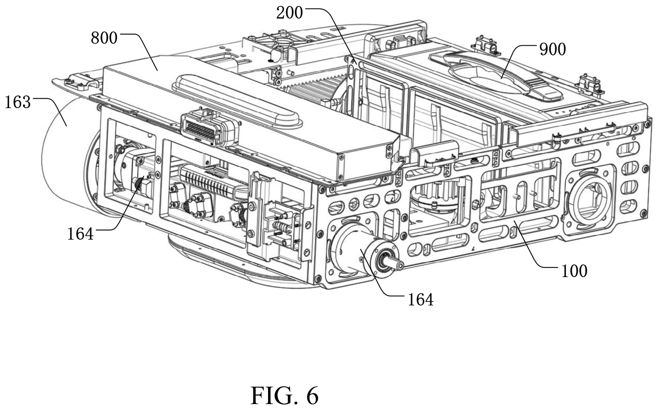

Referring to FIGs. 3 to 5, the cleaning device includes a cleaning casing 510, a roller brush 520, and a roller brush motor 530. The cleaning casing 510 is connected to the front end of the vehicle body 100, that is, the cleaning casing 510 is disposed close to the first space 131 (see FIG. 7). A lower surface of the cleaning casing 510 is concave to form a semicylindrical installation space 511, and the roller brush 520 is disposed in the installation space 511 in its axial direction, and both ends of the roller brush 520 are rotatably connected to the installation space 511. In addition, the roller brush motor 530 is mounted on a side wall of the cleaning casing 510, a power output shaft of the roller brush motor 530 is connected to one end of the roller brush 520, and the roller brush motor 530 is electrically connected to the controller 800 (see FIG. 6).

The cleaning robot is placed on the surface of the photovoltaic panel, and a portion of the roller brush 520 protruding from the installation space 511 is attached to the surface of the photovoltaic panel. When the cleaning robot enters a cleaning mode, the controller 800 sends a working signal to the roller brush motor 530, and the roller brush motor 530 drives the roller brush 520 to rotate in the installation space 511 through the power output shaft, thereby using the part of the roller brush 520 extending from the installation space 511 to clean the dust and attachments on the surface of the photovoltaic panel.

Referring to FIG. 2, the cleaning robot further includes one or more ultrasonic sensors 560 and the ultrasonic sensors 560 are electrically connected to the controller 800 (see FIG. 6). In this embodiment, the ultrasonic sensor 560 is arranged at the front end of the roller brush housing 510 to collect the distance between it and the surface of the photovoltaic panel. The ultrasonic sensor 560 transmits the collected data to the controller 800 to assist the controller 800 in determining the distance and relative position between the roller brush housing 510 and the photovoltaic panel.

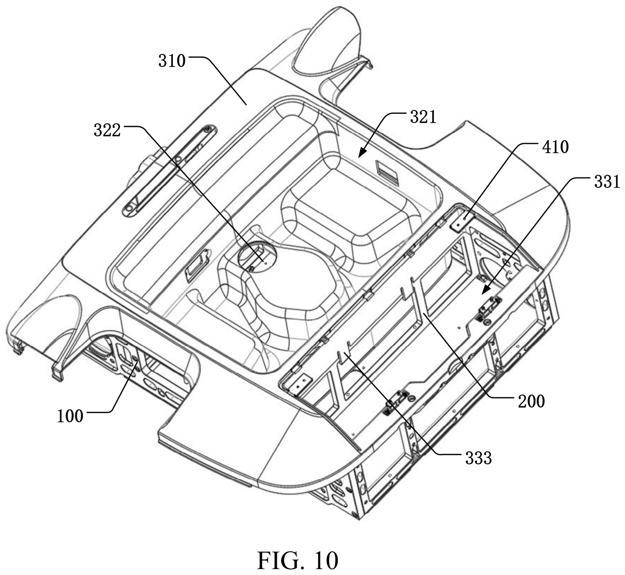

Referring to FIGs. 1, 3, and 4, the water supply device includes a water tank 700, a sealing joint 710, a water pump 550, and at least a nozzle 540. The water tank 700 can be detachably installed in the water tank groove 321. The sinking area of the housing 300 is provided with a first through hole 322 (see FIG. 10), and the sealing joint 710 passes through the first through hole 322. One end of the sealing joint 710 is connected to the water tank 700, and the other end is connected to the water pump 550 via a pipeline 551, and all the nozzles 540 are connected to the water pump 550 via the pipeline 551. The water pump 550 is fixed to the front end of the vehicle body 100 or the rear end of the roller brush housing 510, and the water pump 550 is electrically connected to the controller 800 (see FIG. 6). In addition, all the nozzles 540 are installed to the front end of the roller brush housing 510, and water spraying ports of the nozzles 540 extend into the interior of the installation space 511, so that the nozzles 540 can be used to spray the surfaces of the roller brush 520 and the photovoltaic panel.

When the roller brush motor 530 drives the roller brush 520 to clean the surface of the photovoltaic panel, the controller 800 sends a working signal to the water pump 550, and the water in the water tank 700 is pumped to each nozzle 540 through the sealing joint 710 and the water pump 550, and then the nozzle 540 is used to spray the water onto the roller brush 520 and the surface of the photovoltaic panel.

Referring to FIGs. 7 and 8, the sealing joint 710 is disposed in the second space 132, an upper end of the sealing joint 710 is connected to the water tank 700 (see FIG. 1) through a through hole, and a lower end of the sealing joint 710 is fixed to the top surface of the chassis 110 through a bracket. The connection between the sealing joint 710 and the water tank 700 is sealed to prevent the water in the water tank 700 from flowing out through the sealing joint 710. The sealing joint 710 includes a male joint and a female joint that are detachably connected. Specifically, the female joint is connected to a water outlet of the water tank 700, and the male joint is connected to a water inlet pipe of the water pump 550. A water outlet channel is arranged inside the male connector to supply water to the cleaning robot through the water outlet channel. A first chamber is arranged on the female connector, the male connector is inserted into the first chamber, a water outlet piston is arranged between a water spray hole of a suction pipe and the male connector, the water outlet piston is slidably connected in the first chamber, a valve hole is arranged on a side of the water outlet piston, and the valve hole is connected to the water outlet channel. The male connector can be fixed by plugging into the first chamber, so that the water tank 700 and the cleaning robot can be quickly assembled and disassembled.

The structure and connection relationship between the water tank 700 and the sealing joint 710 can be found in the quick-detachable water tank 700 for a cleaning robot disclosed in the granted patent with number CN 217447596 U, and the detailed contents are not repeated here.

Please refer to FIGs. 6 and 7, the controller 800 is disposed in the first space 131 and fixedly connected to the vehicle body 100. The controller 800 includes a control box and a circuit board disposed in the control box. The circuit board includes a control circuit composed of a plurality of electronic devices. The control box can be fixed to the side wall 120 or to the partition bracket 200 to achieve the fixation of the controller 800 relative to the vehicle body 100. Since a plurality of electronic devices are arranged in the controller 800, a large amount of heat will be generated by the circuit board in the controller 800 when the cleaning robot is working. Therefore, a plurality of heat dissipation ports are arranged on the control box to facilitate heat exchange and heat transfer between the air inside and outside the controller 800.

Referring to FIGs. 6-8, the water tank 700 (see FIG. 1) is detachably installed in the water tank groove 321. Since the water tank groove 321 is formed by the concave portion of the housing 300, the water tank 700 in the water tank groove 321 is located above the housing 300, and the controller 800 in the first space 131 is located below the housing 300, so that the water tank 700 and the controller 800 are isolated from each other. At the same time, the vehicle body 100 and the first part 310 of the housing 300 form the first space 131 with a closed top. When the water inlet of the water tank 700 is poorly sealed and leaks, or when water remains on an outer wall of the water tank 700 that has not been wiped off after the water tank 700 is replenished with water, the water will flow along the outer wall of the water tank 700 into the water tank groove 321. Therefore, the first space 131 with the closed top can prevent water from flowing from above into the controller 800 of the first space 131.

Referring to FIGs. 6 to 8, since the cleaning robot is mainly used to clean inclined photovoltaic panels, the remaining water on the water tank 700 (see FIG. 1) is mainly gathered between the water tank groove 321 and the water tank 700. The water tank groove 321 is formed by the concave shape of the second part 320 of the housing 300. Therefore, the remaining water cannot flow into the first space 131 and the second space 132, thereby ensuring better waterproof isolation between the water tank 700 and the controller 800.

Referring to FIGs. 1 and 8, a bottom shape of the water tank 700 is compatible with an internal space shape of the water tank groove 321. In addition, a bottom size of the water tank 700 is compatible with an internal space size of the water tank groove 321, thereby improving the stability of the water tank 700 placed inside the water tank groove 321. When the cleaning robot moves along the inclined photovoltaic panel, the heavier water tank 700 will be subjected to a vertical downward gravity, which can be decomposed into a first component force perpendicular to the photovoltaic panel and a second component force parallel to the photovoltaic panel. Since the size and shape of the water tank 700 match the water tank groove 321, the water tank 700 of the cleaning robot will be stably pressed against the inner wall of the water tank groove 321 during movement to ensure that the water tank 700 and the cleaning robot will not separate.

Referring to FIGs. 1 and 8, a top of the water tank 700 protrudes from a top of the housing 300. In this embodiment, there is a distance between the top of the water tank 700 and the top surface of the housing 300. The distance is less than a preset threshold. The above preset threshold can be specifically designed according to the specifications of the cleaning robot. The top of the water tank 700 protrudes from the top of the housing 300 by a certain distance, which can increase the volume of the water tank 700 and thus improve the cleaning efficiency of the cleaning robot.

Referring to FIGs. 1 and 8, a handle is disposed on the top of the water tank 700, and the handle is integrally formed with the water tank 700. The water tank 700 is detachably installed in the water tank groove 321, and the handle facilitates the taking and placing of the water tank 700.

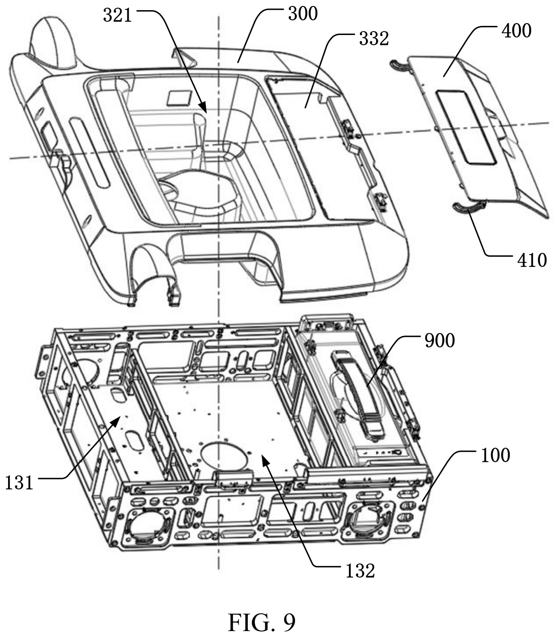

Referring to FIGs. 9 and 10, the cleaning robot further includes a battery pack 900, which can be detachably installed in the battery slot 331 through the opening 332, and the battery pack 900 is electrically connected to the controller 800 (see FIG. 6). Since the second part 320 of the housing 300 is concave to form the water tank groove 321, the second part 320 and the third part 330 thereof extend to both sides of the partition bracket 200, respectively, and a side wall 120 of the water tank groove 321 and a side wall 120 of the battery slot 331 are located on both sides of the partition bracket 200, respectively, so that the water tank groove 321 and the battery slot 331 are isolated from each other.

Referring to FIGs. 9 and 10, a cover plate 400 is openably disposed at the opening 332 of the housing 300. One side of the cover plate 400 is hinged to an edge of the opening 332, so that the cover plate 400 can cover a top of the opening 332. When installing or replacing the battery pack 900, the cover plate 400 is rotated to facilitate taking and placing the battery pack 900 in the battery slot 331, and then the cover plate 400 is rotated to cover the opening 332.

Referring to FIGs. 7 to 10, when the cleaning robot moves along the inclined photovoltaic panel, the battery pack 900 is located in the third space 133 at the rear end of the vehicle body 100. When the water inlet of the water tank 700 (see FIG. 1) is poorly sealed and leaks, or when water remains on the outer wall of the water tank 700 that has not been wiped off after the water tank 700 is replenished with water, the water will gather between the water tank 700 and the water tank groove 321 or other positions of the housing 300. Since the water tank 700 and the battery pack 900 are isolated from each other by the side walls of the water tank groove 321 and the side walls of the battery slot 331, the water in the water tank groove 321 can be prevented from flowing into the battery slot 331 where the battery pack 900 is located, thereby ensuring the stability of the working performance of the battery pack 900.

At the same time, when the cleaning robot climbs a slope, the height of the middle part of the vehicle body 100 is slightly higher than the height of the rear end of the vehicle body 100, so that the water remains on the outer wall of the water tank 700 may partially slide along the housing 300 to the third part 330 of the housing 300. Since the opening 332 is covered with the cover plate 400, water can be prevented from flowing into the battery slot 331 through the opening 332.

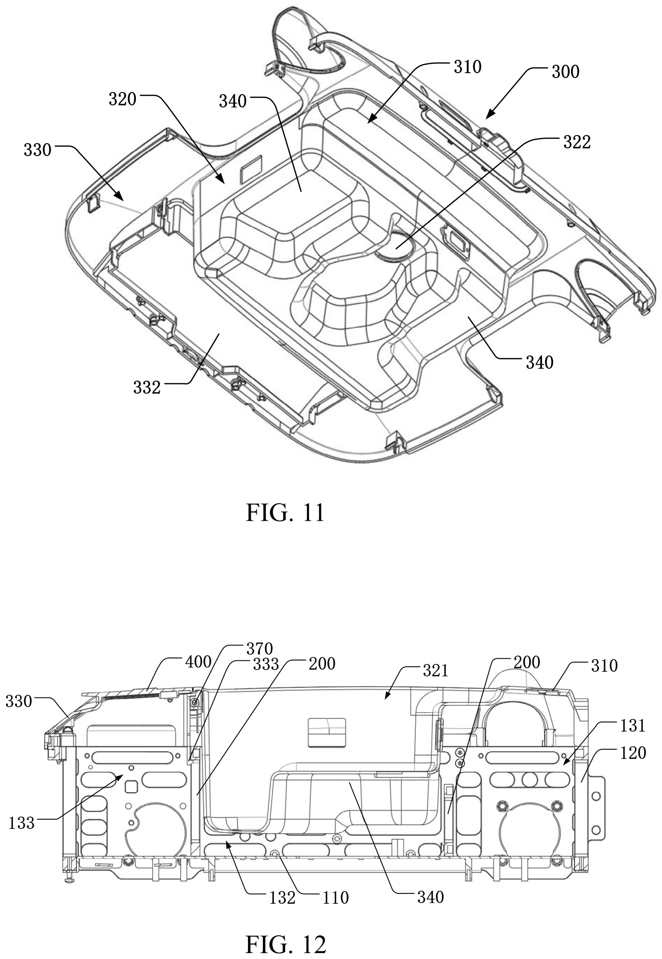

Referring to FIGs. 11 to 14, the third part 330 of the housing 300 is provided with two notches (not shown in the figures) at the opening 332. The two notches are symmetrically distributed about the central axis of the opening 332. A limiting post 360 is fixedly disposed at each opening 332 of the third part 330 of the housing 300. One end of the limiting post 360 is fixed to the housing 300, and the other end extends in a direction away from the opening 332. In addition, two limiting slide rails 410 are disposed at both ends of the cover plate 400, respectively, and the limiting slide rails 410 are located between an inner wall of the housing 300 and an outer wall of the battery slot 331. One end of each of the limiting slide rails 410 extends out through the notch and is fixedly connected to one end of the cover plate 400. The other end of the limiting slide rail 410 can approach or move away from the notch under the drive of the cover body.

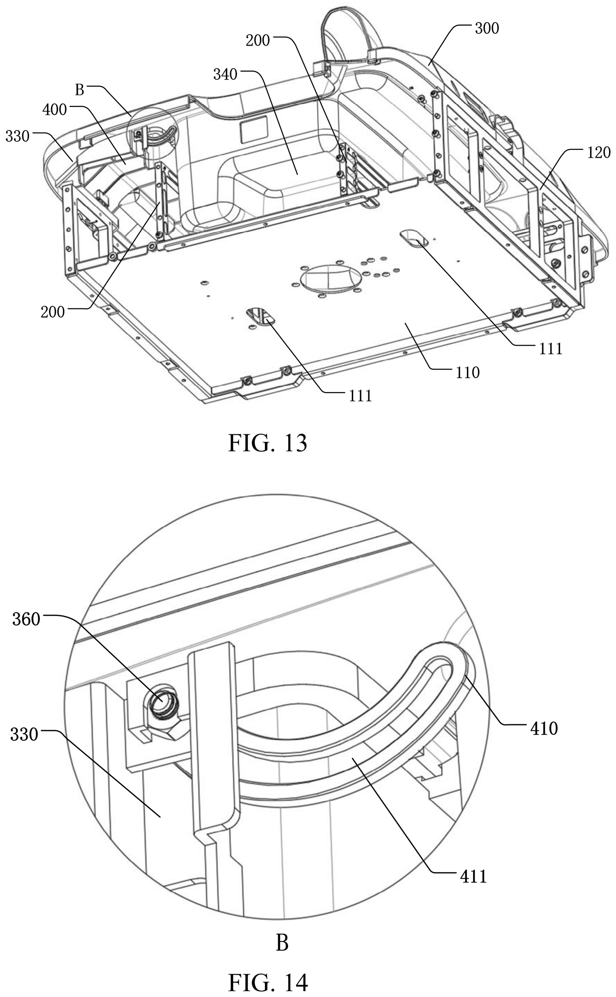

Referring to FIGs. 14 to 15, the limiting slide rail 410 is arc-like in shape, and its structure is substantially the same as a movement trajectory of the cover plate 400. The limiting slide rail 410 is provided with an arc-shaped limiting groove 411, and the limiting post 360 is embedded in the limiting groove 411, so as to limit a movement trajectory of the limiting slide rail 410.

Referring to FIGs. 9 to 15, when the cover plate 400 is opened, the side of the cover plate 400 drives one end of the limiting slide rail 410 to move synchronously, so that the other end of the limiting slide rail 410 moves along the opening trajectory of the limiting groove 411 to the limiting post 360. At this time, the user can place or take the battery pack 900 in the battery slot 331 through the opening 332. After the battery pack 900 is installed or replaced, the cover plate 400 is rotated in the opposite direction, and the cover plate 400 is used to push the limiting slide rail 410 to move in the opposite direction along the opening trajectory of the limiting groove 411 until the cover plate 400 completely covers the opening 332.

Referring to FIGs. 10 and 12, the second part 320 and the third part 330 of the housing 300 extend to both sides of respective one of the partition brackets 200, so that a gap is formed between the outer wall 120 of the water tank groove 321 and the outer wall 120 of the battery slot 331. The housing 300 is located in the gap and is provided with a plurality of torsion springs 370. The torsion springs 370 are fixed to the juncture between the second part 320 and the third part 330. In addition, one end of each of the torsion springs 370 abuts against the outer wall 120 of the water tank groove 321, and the other end thereof abuts against the outer wall 120 of the battery slot 331.

The housing 300 is integrally formed and made of a material having certain elastic properties, such as a polymer material such as plastic. The second part 320 and the third part 330 of the housing 300 extend to both sides of the partition bracket 200, respectively, which can increase the strength of the housing 300 to ensure that after the water tank 700 (see FIG. 1) and the battery pack 900 (see FIG. 9) are placed in the water tank groove 321 and the battery slot 331, respectively, the deformation of the housing 300 is still within a smaller range, thereby extending the service life of the housing 300. At the same time, one end of the torsion spring 370 abuts against the outer wall 120 of the water tank groove 321, so that there is a pressing force between the water tank groove 321 and the water tank 700, which can increase the stability of the placement of the water tank 700.

Referring to FIG. 10, the third part 330 of the housing 300 is located at the end of the battery slot 331 and is provided with a plurality of hooks 333. The partition bracket 200 is a splicing structure composed of multiple horizontally and vertically placed rods. The hooks 333 are embedded in a horizontal rod of the partition bracket 200, so that the end of the third part 330 located in the battery slot 331 is fixed to the partition bracket 200 to increase the tightness of the connection between the housing 300 and the vehicle body 100.

Referring to FIGs. 1 to 9, the water tank groove 321 is formed by a concave shape of the second part 320 in the middle of the housing 300 to ensure that the water tank 700 is placed in the center of the vehicle body 100. In addition, the motor 164 and the controller 800 are installed in the first space 131 at the front end of the vehicle body 100, and the battery pack 900 is installed in the battery slot 331 at the rear end of the vehicle body 100. Since the water tank 700 contains clean water, the water tank 700 therefore is relatively heavy. For this reason, the water tank 700 is placed in the water tank groove 321 at the center of the vehicle body 100, and a pressure point applied by the water tank 700 to the vehicle body 100 is designed to coincide with the center of gravity of the vehicle body 100 as much as possible. At the same time, the motor 164, the controller 800, and the battery pack 900 are distributed on the front and rear sides of the vehicle body 100, respectively, so that the various forces acting on the vehicle body 100 can be offset or evenly distributed as much as possible. The various components are arranged reasonably so that the center of gravity of the cleaning robot is as close to and coincides with the center of gravity of the vehicle body 100 as possible, so as to increase the stability of the cleaning robot when traveling.

In addition, the cleaning device is arranged at the front end of the vehicle body 100, and the roller brush motor 530 and the ultrasonic sensor 560 of the cleaning device are close to the front end of the vehicle body 100, so the controller 800 is arranged in the first space 131 at the front end of the vehicle body 100, which is convenient for the arrangement of lines.

After the cleaning robot has been running for a period of time, the battery pack 900 needs to be charged and replaced in time. Since the cleaning device is arranged at the front end of the vehicle body 100, in order to prevent the roller brush 520 from affecting the user's operation, the battery pack 900 is arranged in the battery slot 331 at the rear end of the vehicle body 100. It is convenient for the user to replace the battery pack 900.

Referring to FIG. 1, image acquisition devices 380 are disposed on two side walls 120 of the vehicle body 100 that are away from each other, respectively, or the image acquisition devices 380 are disposed on both sides of the housing 300, respectively. The image acquisition devices 380 each include a camera or a video camera and are electrically connected to the controller 800 (see FIG. 6). In this embodiment, the image acquisition device is disposed on both sides of the housing 300 to expand a shooting range of the image acquisition device 380.

The image acquisition device 380 can take pictures to record images on both sides of the vehicle body 100 and transmit image information to the controller 800. The image information includes the image information of the vehicle body 100 and the image information of the photovoltaic panel. When the vehicle body 100 travels to the edge of the photovoltaic panel, the controller 800 can determine the position of the vehicle body 100 based on the image and control the cleaning robot to travel according to a preset travel trajectory.

Referring to FIGs. 2 and 6, the photovoltaic panel is covered with metal strips on all sides. A metal sensor 140 is provided at the lower end of the side wall 120 of the vehicle body or below the image acquisition device. The metal sensor 140 is electrically connected to the controller 800. The metal sensor 140 can obtain the position of the vehicle body 100 in real time based on the metal strips, and send signals to the controller 800 in real time, so that the controller 800 can determine the position of the vehicle body 100 and the operating status of the vehicle body 100 based on the change in the distance between the metal sensor 140 and the metal strips on both sides of the vehicle body 100.

In this embodiment, the metal sensor 140 is disposed at the front end of the side wall 120 of the vehicle body to monitor positions of edges of the photovoltaic panel more accurately. When the cleaning robot is cleaning the photovoltaic panel, in order to avoid omissions and blind spots, the roller brush 520 of the cleaning device will move to the edge of the photovoltaic panel or even extend to the outside of the photovoltaic panel. The metal sensor 140 near the front end of the vehicle body 100 will obtain the distance information of the metal strip in real time. The controller 800 determines the position of the vehicle body 100 based on the distance information to ensure that the vehicle body 100 is always located on the surface of the photovoltaic panel, thus preventing the cleaning robot from tipping over, falling, etc.

Referring to FIGs. 2 and 6, a first distance sensor 150 is provided at the lower end of any side wall 120 of the vehicle body 100 or at any corner of the vehicle body 100. The first distance sensor 150 is located close to the front end of the vehicle body 100. In this embodiment, the first distance sensor 150 is located adjacent to the rear side of the metal sensor 140 and is electrically connected to the controller 800. The first distance sensor 150 can obtain the distance between itself and the surface of the photovoltaic panel in real time, and transmit the distance information to the device controller 800.

The surface of the photovoltaic panel is a flat plane. When the cleaning robot cleans along a preset trajectory, the distance acquired by the first sensor is stable within a predetermined range. When the vehicle body 100 moves to the edge of the photovoltaic panel and the position of the first distance sensor 150 is close to the metal strip, the distance detected by the first distance sensor 150 will change significantly. When the first distance sensor 150 transmits the distance information to the controller 800, the controller 800 can determine the position of the vehicle body 100 based on the information to control the cleaning robot to turn.

In this embodiment, the image acquisition device 380 is disposed on both sides of the housing 300 and is arranged close to the front end of the housing 300. The metal sensor 140 is installed on the front end of the side wall 120 of the vehicle body. In addition, the first distance sensor 150 is arranged adjacent to the rear side of the metal sensor 140, and is thus installed to the controller 800 in the first space 131, which facilitates the line connection between the image acquisition device 380, the metal sensor 140, the first distance sensor 150, and the controller 800.

Referring to FIG. 1, the cleaning robot further includes a movable suction device and a central suction device. When the cleaning robot moves along a preset trajectory, the movable suction device can be suctioned to the surface of the photovoltaic panel to increase the safety of the cleaning robot when moving. When the cleaning robot turns, the central suction device is suctioned to the surface of the photovoltaic panel, and at the same time the movable suction device is separated from the photovoltaic panel, and the central suction device is used to drive the vehicle body 100 to turn.

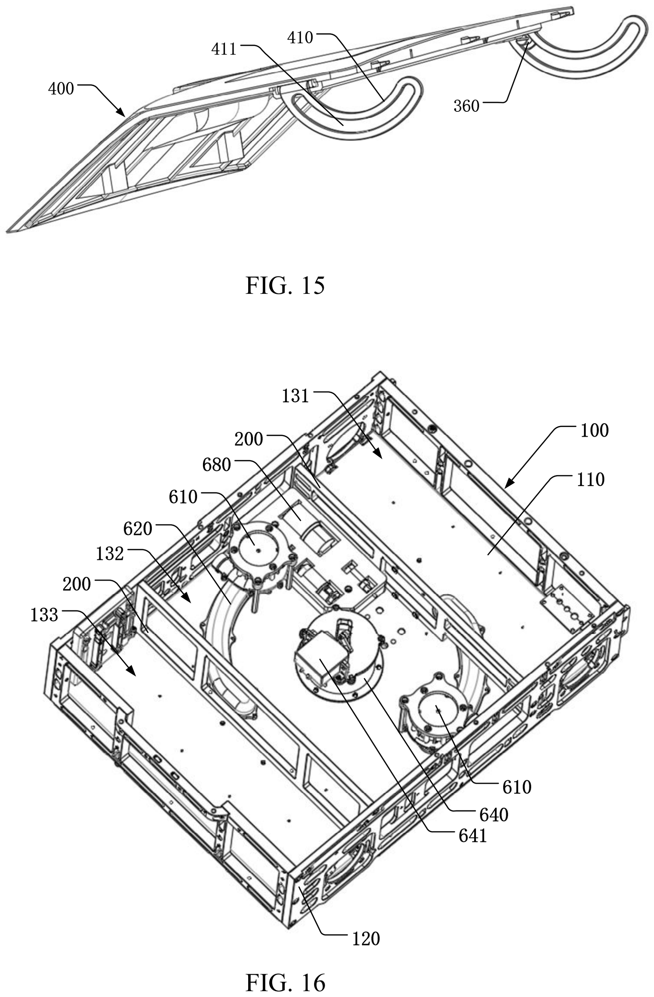

Referring to FIG. 16, the movable suction device includes a fan 610, a ventilation duct 620 and a movable suction cup 630. The fan 610 and the ventilation duct 620 are arranged in the second space 132. At the same time, the fan 610 is fixed to the top surface of the chassis 110 through a support frame. The cross-section of the ventilation duct 620 along its radial direction is semicircular, so the ventilation duct 620 is attached to the top surface of the chassis 110, so that an inner wall of the ventilation duct 620 and the top surface of the chassis 110 are closed to form an air inlet passage.' A fixing flange is protrudingly formed on an outer wall of the ventilation duct 620, and the fixing flange is fixed to the top surface of the chassis 110 by fastening screws.

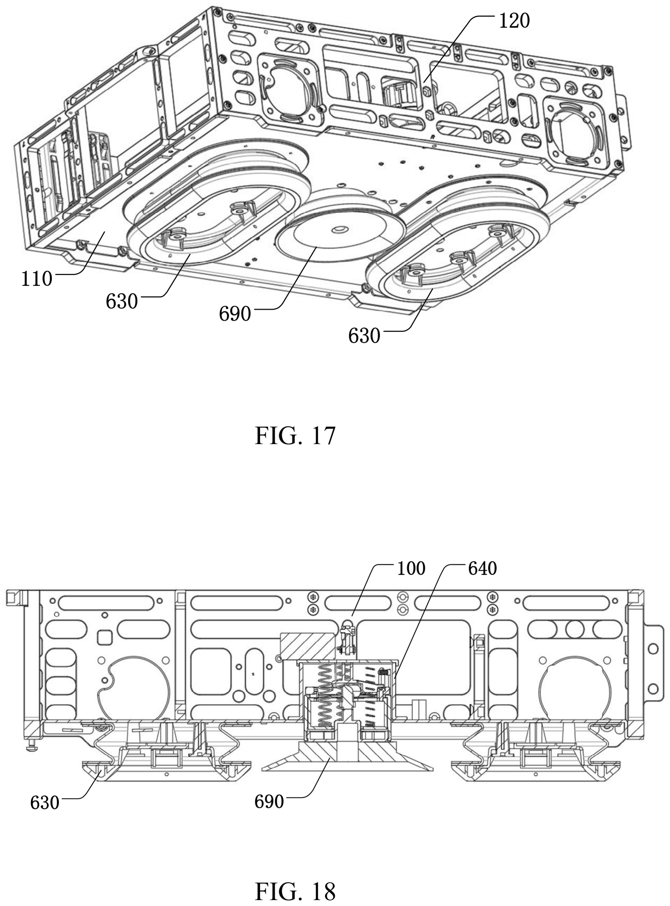

Referring to FIGs. 16 and 17, the top of the movable suction cup 630 is connected to the bottom surface of the chassis 110. The movable suction cup 630 and the chassis 110 enclose a suction space. The chassis 110 is provided with a second through hole 111 (see FIG. 13). The second through hole 111 is located within an orthographic projection of the movable suction cup 630 on the chassis 110. The fan 610 is electrically connected to the controller 800 (see FIG. 6). One end of the ventilation duct 620 is connected to the fan 610, and the other end is connected to the suction space through the second through hole 111. When the bottom of the movable suction cup 630 is attached to the surface of the photovoltaic panel, the controller 800 sends a working signal to the fan 610, and the fan 610 draws air in the suction space through the ventilation duct 620, so that the movable suction cup 630 is adsorbed to the surface of the photovoltaic panel.

Referring to FIGs. 16 and 17, the cleaning robot includes two sets of movable suction devices. The central suction device is located at the center of the vehicle body 100, and the two sets of movable suction devices are located on both sides of the central suction device, respectively. Since the fans 610 in the two sets of movable suction devices are both arranged in the second space 132, in this embodiment, the dimension of the second space 132 in the length direction of the vehicle body 100 is slightly less than the dimension of the second space 132 in its width direction. Therefore, the two fans 610 are symmetrically distributed on the left and right sides of the central suction device. By reasonably arranging the fans 610 and the central suction device, the utilization rate of the second space 132 can be improved, and the weight of a plurality of components in the second space 132 can be more evenly distributed as well, thereby improving the stability of the cleaning robot when movable.

The movable suction cup 630 of one of the movable suction devices is located below the first space 131 and the second space 132, and the movable suction cup 630 of the other one of the movable suction devices is located below the third space 133 and the second space 132. The two movable suction cups 630 are located on the front and rear sides of the central suction device, respectively, so that parts of the two movable suction cups 630 are located below the first space 131 and the third space 133, respectively, which can improve the space utilization at the bottom of the chassis 110 and increase the size of the movable suction cup 630, thereby improving the suction effect between the movable suction device and the photovoltaic panel. In addition, an adsorption force is existing between the movable suction cup 630 and the photovoltaic panel, so the suction cup located at the lower part of the first space 131 and the third space 133 can also generate adsorption force with the photovoltaic panel. Since the motor 164 and the controller 800 are installed in the first space 131 (see FIG. 6), and the battery pack 900 is installed in the third space 133 (see FIG. 9), the two movable suction cups 630 can increase the stability of the cleaning robot during movement, so that the adsorption force at various positions of the chassis is relatively evenly distributed.

Referring to FIGs. 16 to 19, the central suction device includes a support base 640, a linkage assembly, a first linkage member 670, a steering suction cup 690, and an air suction assembly. The central suction device is disposed in the second space 132 and can assist the cleaning robot in turning to prevent the crawler track 163 (see FIG. 3) from sliding when the vehicle body 100 is turning.

The support base 640 is a hollow columnar structure. A bottom of the support base 640 is fixedly connected to the top surface of the chassis 110 by fastening screws. At the same time, a support cover is arranged above the support base 640, and a servomotor 641 is installed on an upper surface of the support cover. The linkage assembly is at least partially disposed inside the support base 640, and the linkage assembly is hinged to an output shaft of the servomotor 641, so that the servomotor 641 drives the linkage assembly to move axially along the support base 640.

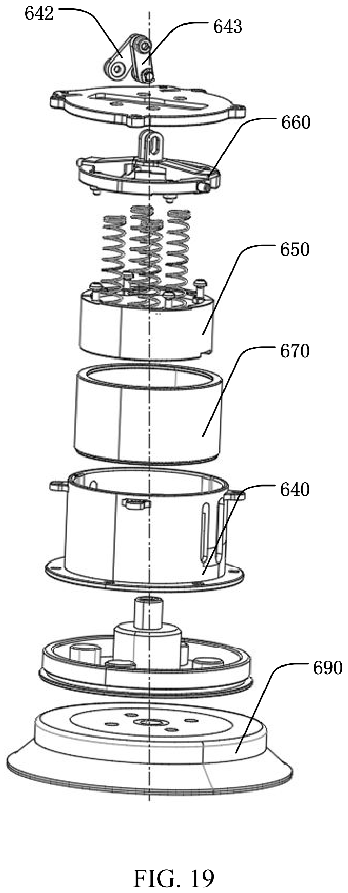

Please refer to FIGs. 16 and 19, the first linkage member 670 includes a first end extending into the support base 640 and a second end extending out of the support base 640. The linkage assembly is connected to the first end of the first linkage member 670, and the steering suction cup 690 is connected to the second end of the first linkage member 670. The servomotor 641 drives the linkage assembly to move along the axial direction of the support base 640, and the linkage assembly drives the steering suction cup 690 to move closer to or away from the photovoltaic panel through the first linkage member 670.

The air suction assembly is located in the second space 132 and is fixed to the top surface of the chassis 110. The air suction assembly includes a vacuum generator 680, which is connected to the steering suction cup 690 through an air pipe. When the steering suction cup 690 is driven to the surface of the photovoltaic panel by the linkage assembly and the first linkage member 670, the vacuum generator 680 extracts the air in the steering suction cup 690, so that the steering suction cup 690 is adsorbed to the surface of the photovoltaic panel.

Referring to FIG. 19, the linkage assembly includes a second linkage member 650 and a third linkage member 660. The second linkage member 650 is located inside the first linkage member 670, the third linkage member 660 is located inside the support base 640, and a lower surface of the third linkage member 660 is close to an upper surface of the first linkage member 670. The second linkage member 650 and the third linkage member 660 are fixedly connected by fastening screws to ensure that the second linkage member 650 and the third linkage member 660 can move synchronously.

Referring to FIGs. 16 and 19, the servomotor 641 is hinged to the third linkage member 660 through a connecting rod assembly. The connecting rod assembly includes a first rod body 642 and a second rod body 643. Specifically, one end of the first rod body 642 is hinged to one end of the second rod body 643, the output shaft of the servomotor 641 is hinged to the other end of the first rod body 642, and the third linkage member 660 is hinged to the other end of the second rod body 643. Therefore, the servomotor 641 can drive the third linkage member 660 to move axially along the support base 640 through the combination of the first rod body 642 and the second rod body 643.

The first end of the first linkage member 670 forms a convex ring in the direction of the central axis thereof, and the second linkage member 650 and the third linkage member 660 are located at upper and lower sides of the convex ring, respectively. Since the second linkage member 650 and the third linkage member 660 are fixedly connected at opposite ends, the servomotor 641 can drive the second linkage member 650 and the third linkage member 660 to rise and fall synchronously, thereby pushing the first linkage member 670 and the steering suction cup 690 to rise and fall synchronously.

When the servomotor 641 drives the third linkage member 660 to approach the photovoltaic panel, the second linkage member 650 can move synchronously with the third linkage member 660, and the third linkage member 660 can push the convex ring of the first linkage member 670 to move downward in the axial direction of the support base 640, so that the first linkage member 670 drives the steering suction cup 690 to approach the photovoltaic panel until the steering suction cup 690 is attached to the surface of the photovoltaic panel, and the servomotor 641 stops moving. When the servomotor 641 lifts the third linkage member 660 so that it drives the second linkage member 650 away from the photovoltaic panel, a top end of the second linkage member 650 can abut against the convex ring of the first linkage member 670 and rise, so that the first linkage member 670 drives the steering suction cup 690 to be synchronously lifted and detached from the surface of the photovoltaic panel until the steering suction cup 690 moves to an initial position.

Referring to FIGs. 11, 12, and 16, since the fan 610 of the movable suction device and the support base 640 of the central suction device are both fixed to the top surface of the chassis 110, and the housing 300 is located in the sinking area of the second part 320 to form a water tank groove 321 inwardly, in order to ensure that the movable suction device and the central suction device have sufficient installation space 511, in this embodiment, at least one recessed portion 340 is formed on the bottom surface of the sinking area, and a fourth space is enclosed between each recessed portion 340 and the top surface of the chassis 110.

Referring to FIGs. 11, 12, and 16. Two movable suction devices and one central suction device can be located in one or more recessed portions 340. In this embodiment, the movable suction device and the central suction device are sequentially arranged in three parallel recessed portions 340. Above the sinking area is the water tank groove 321 for placing the water tank 700, and below the sinking area are the movable suction device and the central suction device for assisting movement and turning. According to the space design requirements of the fan 610 and the support base 640, the depth and size of the recessed portion 340 are adaptively designed. In addition, the size and shape of the water tank 700 are adaptively designed according to the size and shape inside the water tank groove 321, which can meet the installation requirements of multiple components such as the water tank 700, the movable suction device, and the central suction device, thereby maximizing the use of the second space 132.

Referring to FIGs. 1 to 19, in this embodiment, the water tank groove 321 is formed by a concave shape in the sinking area of the housing 300, so the first space 131 and the second space 132 are isolated from each other by the side wall 120 of the water tank groove 321; in addition, the water tank 700 is located above the housing 300, and the controller 800 is located below the housing 300, so the controller 800 and the water tank 700 are isolated from each other and have good water-proof performance.

The above is a detailed introduction to a cleaning robot provided by the present application. Specific examples are used in this article to illustrate the principles and implementation methods of the present application. The description of the above embodiments is only used to help understand the method of the present application and its core idea; in addition, for general technical personnel in this field, based on the idea of the present application, there will be changes in the specific implementation method and application scope. Accordingly, the content of this specification should not be regarded as a limitation on the present application.

## Claims

1. A cleaning robot, comprising:
a vehicle body comprising a chamber surrounded by a chassis and a side wall of the vehicle body, wherein the chamber is sequentially divided into a first space, a second space, and a third space by two partition brackets;
a controller disposed in the first space and fixed to the vehicle body;
a housing fixed to a top of the vehicle body and covering the chamber of the vehicle body, wherein a middle part of the housing is concave to form a sinking area, and the sinking area extends into the second space and surrounds a water tank groove; and
a water tank detachably installed in the water tank groove.

2. The cleaning robot according to claim 1, wherein a bottom shape of the water tank is adapted to an internal space shape of the water tank groove;
a bottom size of the water tank is adapted to an internal space size of the water tank groove; and
a top of the water tank protrudes from a top of the housing and is spaced from a top surface of the housing at a distance less than a preset threshold.

3. The cleaning robot according to claim 1, further comprising:
a sealing joint disposed in the second space;
wherein the sinking area of the housing defines a first through hole, the sealing joint passes through the first through hole and is connected to the water tank, and a junction between the sealing joint and the water tank is sealed.

4. The cleaning robot according to claim 1, further comprising a movable suction device, wherein the movable suction device comprises:
a fan disposed in the second space and being fixed to a top surface of the chassis and electrically connected to the controller;
a ventilation duct disposed in the second space and fixed to the top surface of the chassis; and
a movable suction cup arranged on a bottom surface of the chassis, and a suction space enclosed between the movable suction cup and the chassis;
wherein the chassis defines a second through hole, and the second through hole is located in a projection of the movable suction cup on the chassis, one end of the ventilation duct connected to the fan, and the other end connected to the suction space through the second through hole.

5. The cleaning robot according to claim 4, wherein the cleaning robot comprises two sets of the movable suction devices, part of the movable suction cup of one of the movable suction devices is located below the first space, and part of the movable suction cup of the other one of the movable suction devices is located below the third space.

6. The cleaning robot according to claim 1, further comprising a central suction device, wherein the central suction device comprises:
a support base being columnar-shaped and connected to a top surface of the chassis;
a linkage assembly at least partially located in the support base and being driven to move in an axial direction of the support base;
a first linkage member comprising a first end extending into the support base and a second end extending out of the support base, the linkage assembly abutting against the first end and synchronously moving in the axial direction of the support base;
a steering suction cup connected to the second end; and
an air suction assembly arranged in the second space and fixed to the top surface of the chassis and connected to the steering suction cup.

7. The cleaning robot according to claim 1, wherein at least one recessed portion is arranged on a bottom surface of the sinking area, and a fourth space is enclosed between each recessed portion and a top surface of the chassis;
wherein the cleaning robot comprises a central suction device and two fans, the central suction device is connected to the center of the chassis and is partially fixed to the top surface of the chassis, the fans are arranged in the second space, symmetrically distributed about a central axis of the central suction device, and fixed to the top surface of the chassis; and
the central suction device and the fans are located in the recessed portion.

8. The cleaning robot according to claim 1, further comprising:
a motor disposed in the first space and fixed to a top surface of the chassis, wherein the motor is located between the controller and the chassis and electrically connected to the controller; and
two sets of traveling devices symmetrically connected to the vehicle body, and each of the traveling devices comprising:
a driving wheel connected to an output shaft of the motor and rotatably mounted to the side wall of the vehicle body;
a driven wheel rotatably mounted to the side wall of the vehicle body; and
a crawler track annularly covering the driving wheel and the driven wheel on the same side of the vehicle body.

9. The cleaning robot according to claim 1, wherein the housing comprises a first part, a second part, and a third part which are integrally formed;
the first part of the housing covers the first space;
the second part of the housing forms the sinking area; and
the third part of the housing extends into the third space and forms a battery slot with the top surface of the chassis, wherein the third part defines an opening communicating with the battery slot.

10. The cleaning robot according to claim 9, wherein the second part and the third part extend to two sides of one of the partition brackets, respectively, and a torsion spring is disposed on the housing and located above the one of the partition brackets, one end of the torsion spring abutting against the second part, and the other end of the torsion spring abutting against the third part; and
the third part comprises a hook engaged with the one of the partition brackets.

11. The cleaning robot according to claim 1, further comprising:
a battery pack detachably mounted in the third space and electrically connected to the controller; and
an opening located at the housing and arranged opposite to the third space such that the battery pack passes through the opening.

12. The cleaning robot according to claim 11, wherein two notches are located at the housing and are symmetrically distributed about a central axis of the opening, wherein the cleaning robot further comprises:
a cover plate coverably installed at the opening of the housing;
at least two limiting posts fixed to the housing; and
at least two limiting slide rails, one end of each of the limiting slide rails passing through respective one of the notches and connected to the cover plate, wherein the limiting slide rail defines an arc-shaped limiting groove, and the limiting post is embedded in the limiting groove.

13. The cleaning robot according to claim 1, wherein the controller comprises a control box fixed to the side wall of the vehicle body and/or the partition brackets; and
a circuit board arranged in the control box and comprising a control circuit composed of a plurality of electronic devices.

14. The cleaning robot according to claim 1, further comprising:
two or more image acquisition devices arranged on two side walls of the vehicle body that are away from each other, and/or are arranged on the housing, wherein the image acquisition devices are electrically connected to the controller;
a metal sensor disposed at lower ends of two side walls of the vehicle body facing away from each other, and/or the metal sensor disposed below the image acquisition devices and electrically connected to the controller; and
a first distance sensor arranged at the lower end of any side wall of the vehicle body or at a corner of the vehicle body, and the first distance sensor electrically connected to the controller.

15. The cleaning robot according to claim 1, further comprising:
a cleaning casing hingedly connected to the side wall of the vehicle body and located close to the first space, and the cleaning casing defining an installation space;
a roller brush rotatably mounted in the installation space of the cleaning casing; and
a roller brush motor installed at a side wall of the cleaning casing and comprising a power output shaft connected to one end of the roller brush, and the roller brush motor electrically connected to the controller.
